# EUROPÄISCHE PATENTSCHRIFT

(11) **EP 2 173 585 B1**
(45) Veröffentlichungstag und Bekanntmachung des Hinweises auf die Patenterteilung: **21.03.2018**
(21) Anmeldenummer: 08749458.9
(22) Anmeldetag: 15.05.2008
(51) Int. Cl.: F21S 8/10, H05B 33/08, F21Y 115/10, B60Q 1/26, F21V 23/04, B60Q 1/38

(54) **KRAFTFAHRZEUGLEUCHTENSYSTEM**
MOTOR VEHICLE LIGHT SYSTEM
SYSTÈME D'ÉCLAIRAGE POUR VÉHICULE AUTOMOBILE

(30) Priorität: 07.07.2007 DE 102007031800
(43) Veröffentlichungstag der Anmeldung: 14.04.2010
(73) Patentinhaber: Bayerische Motoren Werke Aktiengesellschaft, 80809 München (DE)
(72) Erfinder: ERDL, Dr. Helmut, 83126 Flintsbach (DE)
(74) Vertreter: Mayer-Martin, Christian
(86) Internationale Anmeldenummer: PCT/EP2008/003878
(87) Internationale Veröffentlichungsnummer: WO 2009/006963

(56) Entgegenhaltungen:
- EP-A- 0 967 590
- EP-A- 1 071 312
- EP-A- 1 087 642
- EP-A- 1 161 121
- EP-A2- 1 594 346
- DE-A1- 4 308 514
- DE-A1-102005 032 921

## Beschreibung

Die Erfindung betrifft ein Kraftfahrzeugleuchtensystem.

Im Fokus der Kraftfahrzeugleuchten-Entwicklung stehen momentan auf Leuchtdioden basierende Kraftfahrzeugleuchten.

Bezüglich des von einer Kraftfahrzeugleuchte abgegebenen Lichtstroms sind regelmäßig minimale oder maximale Grenzwerte einzuhalten, die entweder gesetzlich vorgegeben sind oder sich aus Kundenwünschen ergeben.

Aus der EP1594346A2 ist eine Ansteuerung einer Blinkleuchte eines Kraftfahrzeuges bekannt, bei dem eine Leuchtdiode während eines Blinkintervalls durch eine Pulsweitenmodulation auf- und abgedimmt wird.

Der Erfindung liegt nun die Aufgabe zu Grunde, ein - auf zumindest einer Leuchtdiode basierendes - Kraftfahrzeugleuchtensystem anzugeben, durch das gesetzlich oder quasi-gesetzliche Vorgaben hinsichtlich des abgegebenen Lichtstroms oder hinsichtlich mit dem abgegeben Lichtstrom korrelierender Größen eingehalten werden, und zugleich die Blendung von anderen Verkehrsteilnehmern verhindert wird.

Diese Aufgabe wird durch die Merkmale des unabhängigen Patentanspruchs gelöst. Vorteilhafte Weiterbildungen der Erfindung sind den abhängigen Ansprüchen zu entnehmen.

Die Erfindung basiert dabei auf dem Gedanken, eine Kraftfahrzeugleuchte, die zumindest eine Leuchtdiode umfasst, durch eine Leuchtdioden-Steuereinrichtung anzusteuern, die derart eingerichtet ist, dass die Leuchtdiode in einem aktiven Zustand oder Ein-Zustand der Kraftfahrzeugleuchte - im Sinne einer oder durch eine Pulsweitenmodulation - dimmbar ist, wobei das Tastverhältnis im aktiven Zustand der Kraftfahrzeugleuchte variiert wird.

Die Leuchtdioden-Steuereinrichtung kann dabei einen programmtechnisch entsprechend eingerichteten Mikrocontroller, geeignete Schaltelemente, ein geeignetes Treibermodul, ein Pulsweitenmodulations-Modul und/oder geeignete Speichermittel umfassen. Die Leuchtdioden-Steuereinrichtung kann separat von einer Kraftfahrzeugleuchten-Steuereinrichtung oder als insbesondere funktioneller Teil einer Kraftfahrzeugleuchten-Steuereinrichtung gebildet sein.

Die Pulsweitenmodulation (PWM) ist eine Modulationsart, bei der eine technische Größe (beispielsweise die Stromstärke oder die Spannung) zwischen zwei Werten wechselt. Dabei wird das Tastverhältnis bei konstanter Frequenz moduliert. Das Tastverhältnis (Tastgrad, duty cycle) gibt beispielsweise das Verhältnis der Länge des eingeschalteten Zustands (Impulsdauer) zur Periodendauer an. Liegt beispielsweise die Frequenz der Pulsweitenmodulation bei 200 Herz, so kann die Leuchtphase (eingeschalteter Zustand) der Leuchtdiode mit dem Auge nicht mehr von der Dunkelphase der Leuchtdiode unterschieden werden. Es ergibt sich für den menschlichen Betrachter ein gedimmter Zustand der Leuchtdiode, wobei die Leuchtdiode umso heller erscheint je größer das Tastverhältnis ist. Je größer das Tastverhältnis ist, desto größer ist auch der von der Leuchtdiode erzeugte Durchschnitts-Lichtstrom über mehrere Impulsdauern.

Das Tastverhältnis wird derart variiert, dass die Leuchtdiode im aktiven Zustand der Kraftfahrzeugleuchte im Wesentlichen einen konstanten Durchschnitts-Lichtstrom ausgibt, wobei der Durchschnitts-Lichtstrom beispielsweise über fünf oder zwanzig PWM-Impulsdauern ermittelt wird.

In der Regel nimmt der durch eine Leuchtdiode erzeugte Lichtstrom mit der Zeit aufgrund eines Temperatureffektes stark ab. So kann der erzeugte Lichtstrom beispielsweise schon nach 3 Sekunden Leuchtdauer um 30 Prozent abnehmen. Aufgrund von insbesondere gesetzlichen Vorgaben ist aber beispielsweise auch nach 5 Sekunden noch ein vorgegebener Mindest-Lichtstrom zu erzeugen. Um dies bei geringem Stromversorgungs-Hardware-Aufwand zu gewährleisten, wäre die Leuchtdiode von Anfang an mit erhöhter elektrischer Leistung zu versorgen. Dies würde aber insbesondere unmittelbar nach dem Einschalten der Kraftfahrzeugleuchte zu einem besonders hohen, weit über dem vorgegebenen Mindest-Lichtstrom liegenden Lichtstrom führen, der zur Blendung anderer Verkehrsteilnehmer führen würde.

Dies wird dadurch verhindert, dass die Leuchtdiode in einem aktiven Zustand der Kraftfahrzeugleuchte im Sinne einer Pulsweitenmodulation gedimmt wird, wobei das Tastverhältnis mit der Zeit erhöht wird. Insbesondere wird das Tastverhältnis derart variiert, dass die Leuchtdiode im aktiven Zustand der Kraftfahrzeugleuchte im Wesentlichen einen konstanten Durchschnitts-Lichtstrom ausgibt, wobei der Durchschnitts-Lichtstrom beispielsweise über fünf PWM-Impulsdauern ermittelt wird. Der Begriff "im Wesentlichen konstanter Durchschnitts-Lichtstrom" ist dabei weit auszulegen, da es ja nur darauf ankommt, den erzeugten Durchschnitts-Lichtstrom insbesondere unmittelbar nach dem Einschalten der Kraftfahrzeugleuchte mittels der Pulsweitenmodulation zu reduzieren, um eine Blendung zu vermeiden. Unmittelbar nach dem Einschalten oder Aktiv-Schalten der Kraftfahrzeugleuchte ist dabei das Tastverhältnis vorzugsweise entsprechend dem vorgegebenen Mindest-Lichtstrom eingestellt.

Es ist vorgesehen, dass die Kraftfahrzeugleuchte ein Fahrtrichtungsanzeiger ist, wobei die Kraftfahrzeugleuchten-Steuereinrichtung oder die Leuchtdioden-Steuereinrichtung derart eingerichtet ist, dass die Kraftfahrzeugleuchte zur Realisierung der Fahrtrichtungsanzeige-Funktion abwechselnd aktiv und inaktiv geschaltet wird, und dass das Tastverhältnis, insbesondere das Durchschnitts-Tastverhältnis während des aktiven Zustandes, während des ersten aktiven Zustandes (erster Blinkpuls des Fahrtrichtungsanzeigers) kleiner ist als während des zweiten aktiven Zustandes (zweiter Blinkpuls des Fahrtrichtungsanzeigers) der Kraftfahrzeugleuchte. Dabei kann das Tastverhältnis während eines aktiven Zustandes konstant oder variabel sein, insbesondere während eines aktiven Zustandes ebenfalls mit der Zeit zunehmen.

Basis dieses Aspekts ist die Erkenntnis, dass der genannte Temperatureffekt bei für die Fahrtrichtungsanzeige-Funktion erforderlichen Leuchtdioden besonders ausgeprägt sein kann, und dass die geschilderte AnfangsBlendung bei einem ohnehin mit einer ausgeprägten Signalwirkung verbundenen Fahrtrichtungsanzeiger besonders unangenehm ist.

Durch die Erfindung wird erreicht, dass durch ein geeignet variabel eingestelltes Tastverhältnis bei Vermeidung von Blendeffekten über längere Zeiträume mindestens ein gewünschter (Durchschnitts-)Lichtstrom ausgegeben wird. Dabei können über ein geeignetes Tastverhältnis zeitliche Veränderungen des durch die Leuchtdiode ausgegebenen Lichtstroms, beispielsweise aufgrund eines Temperatureffektes, kompensiert werden.

Bevorzugt ist vorgesehen, dass Informationen über das anzuwendende Tastverhältnis, insbesondere über den zeitlichen Verlauf des Tastverhältnisses oder die Zuordnung eines Tastverhältnisses zu einem aktiven Zustand, in der Leuchtdioden-Steuereinrichtung oder einer dieser zugeordneten Speichereinrichtung abgespeichert, abgelegt oder festgehalten sind, beispielsweise in Form einer mathematischen Funktion samt entsprechender Parameter oder in Form einer Tabelle. Dazu wird beispielsweise der für einen im Wesentlichen konstanten Lichtstrom erforderliche zeitliche Verlauf des Tastverhältnisses vor Beginn einer Serienfertigung von Kraftfahrzeugleuchten einmal an den zu verbauenden Leuchtdiodentyp angepasst, und dann in jeder Kraftfahrzeugleuchte abgespeichert. Dies ist gegenüber einer Steuerung des Tastverhältnisses in Abhängigkeit von einer aktuell mittels eines Temperaturfühlers gemessenen Temperatur erstens zuverlässiger und zweitens ökonomischer realisierbar. Denn entscheidend für den Lichtstrom ist nicht die Umgebungstemperatur, die Platinentemperatur oder die Gehäusetemperatur, sondern die Temperatur der leuchtenden Halbleiterfläche; und diese ist über einen Temperaturfühler praktisch nicht messbar.

Alternativ dazu sind die Informationen über das anzuwendende Tastverhältnis, insbesondere über den zeitlichen Verlauf des Tastverhältnisses oder die Zuordnung eines Tastverhältnisses zu einem aktiven Zustand, in einer Speichereinrichtung der Kraftfahrzeugleuchte, insbesondere des Fahrtrichtungsanzeiger-Moduls oder einer diesem zugeordneten Speichereinrichtung oder Steuereinrichtung abgespeichert, abgelegt oder festgehalten. Die Speichereinrichtung oder die Steuereinrichtung ist dabei vorzugsweise zusammen mit der Kraftfahrzeugleuchte, insbesondere mit dem FahrtrichtungsanzeigerModul, austauschbar, so dass beim Verbau einer Austausch-Kraftfahrzeugleuchte, insbesondere eines Austausch-Fahrtrichtungsanzeiger-Moduls, die einen anderen Leuchtdiodentyp enthält, die daran angepassten Informationen über das im Sinne der Erfindung erforderliche Tastverhältnis automatisch gleich mit ausgetauscht werden.

Vorzugsweise ist die Leuchtdiode derart ausgeführt, dass der durch eine aktive Leuchtdiode erzeugte Lichtstrom bei konstantem Tastverhältnis aufgrund eines Temperatureffekts mit der Zeit abnimmt; das Tastverhältnis wird dann derart mit der Zeit erhöht, dass der Temperatureffekt im Wesentlichen kompensiert wird. Auch hier ist der Begriff "im Wesentlichen", wie oben schon einmal begründet, weit auszulegen.

Im Folgenden wird die Erfindung anhand von Beispielen unter Bezugnahme auf die folgenden Figuren näher erläutert:
- Figur 1: zeigt eine vereinfachte prinzipielle Darstellung des zeitlichen Verlaufs verschiedener Größen;
- Figur 2: zeigt ein vereinfachtes Prinzipschaltbild.

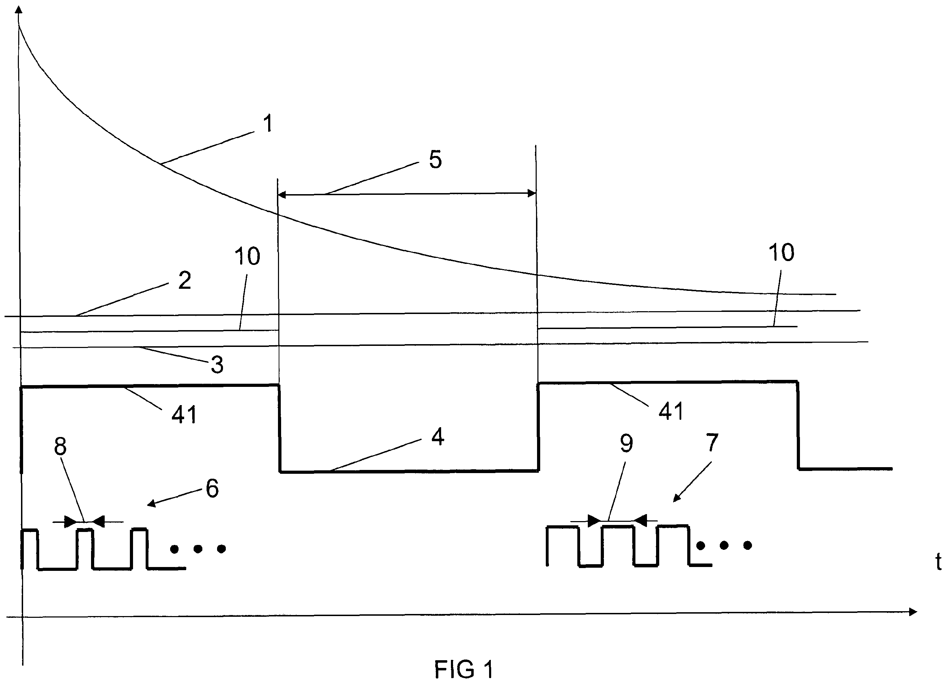

Figur 1 zeigt den angenommenen zeitlichen Verlauf des von einer Leuchtdiode erzeugten Lichtstroms 1 bei einer konstanten Versorgungsspannung. Dieser nimmt aufgrund eines an sich bekannten Temperatureffekts mit der Zeit ab. Der Lichtstrom nähert sich mit der Zeit einem Grenzwert 2, der über einem vorgegebenen Mindestlichtstrom 3, der zu Erfüllung gesetzlicher Vorschriften erforderlich ist, liegt.

Außerdem ist ein zeitlicher Signalverlauf 4 angezeigt, welcher der Versorgungsspannung der Leuchtdiode zur Realisierung eines Fahrtrichtungsanzeigers entspricht. Die Leuchtdiode wird dadurch abwechselnd aktiviert und deaktiviert, um das Blinklicht des Fahrtrichtungsanzeigers zu realisieren. Die Leuchtdiode erzeugt daher während des inaktiven Zeitraums 5 keinen Lichtstrom. Die Periodendauer liegt beispielsweise zwischen 0,5 Sekunden und 2 Sekunden. Der von der Leuchtdiode in der ersten aktiven Phase erzeugte Lichtstrom wäre aufgrund des Temperatureffektes viel höher als der vorgegebene Mindestlichtstrom 3 und würde daher zur Blendung von Passanten führen.

Aus diesem Grund wird der Versorgungsspannung zumindest während der aktiven Phasen 41 ein pulsweitenmoduliertes Signal 6,7 aufgeprägt, um den Durchschnitts-Lichtstrom während einer aktiven Phase 41 zu reduzieren, wobei die Reduzierung mit der Zeit abnimmt, um oben genannten Temperatureffekt zu kompensieren. Das Tastverhältnis und die Pulsdauer 8,9 der Pulsweitenmodulation ist also in der ersten aktiven Phase kleiner als in der zweiten aktiven Phase. Die Frequenz der Pulsweitenmodulation liegt vorteilhafterweise über der menschlichen Wahrnehmungsgrenze für optische Ein/Aus-Signale, insbesondere zwischen 150 und 300 Herz.

Es ergibt sich bei einer Anwendung der Signale 4, 6 und 7 auf die Versorgungsspannung der Leuchtdiode im Idealfall ein durch die Leuchtdiode erzeugter wahrnehmbarer Lichtstrom (Durchschnitts-Lichtstrom), der dem Verlauf 10 entspricht.

Es wird noch einmal darauf hingewiesen, dass die dargestellten Signalverläufe lediglich das Prinzip der Erfindung erläutern sollen, aber insbesondere in quantitativer Hinsicht nicht aussagekräftig sind.

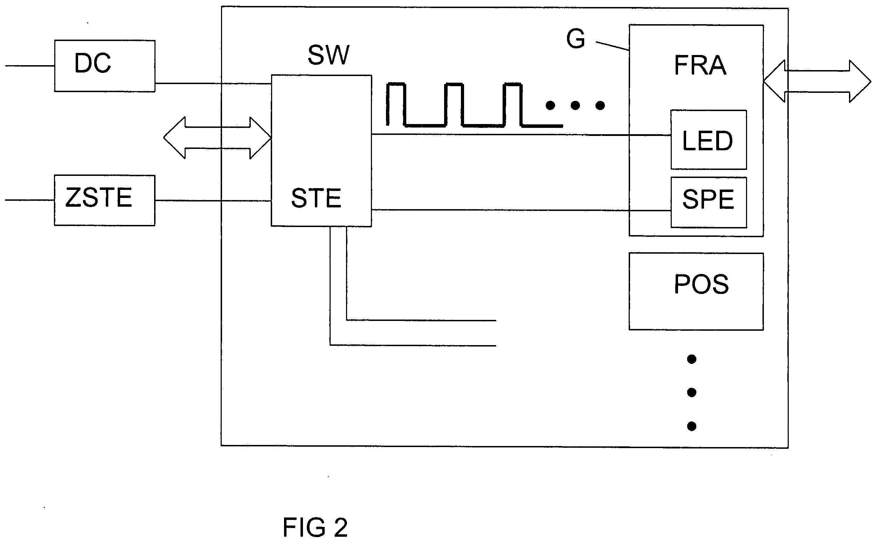

Figur 2 zeigt ein Schweinwerfermodul SW eines Kraftfahrzeuges mit einem Fahrtrichtungsanzeigermodul FRA als Kraftfahrzeugleuchte, das zumindest eine Leuchtdiode LED und eine Speichereinrichtung SPE innerhalb eines austauschbaren Gehäuses G umfasst. In der Speichereinrichtung SPE sind Informationen über den zeitlichen Verlauf des anhand von Figur 1 erläuterten Tastverhältnisses abgespeichert, der dem Leuchtdiodentyp der Leuchtdiode LED entspricht, der also an den spezifischen Temperatureffekt dieses Leuchtdiodentyps angepasst ist.

Über eine dezentrale im Gehäuse des Scheinwerfermoduls SW angeordnete Steuereinrichtung STE, insbesondere Leuchtdioden-Steuereinrichtung, wird die Leuchtdiode mit Spannung einer Spannungsbereitstellungsvorrichtung DC versorgt. Die von der Spannungsbereitstellungsvorrichtung DC bereitgestellte Spannung wird durch die Steuereinrichtung, die auch entsprechend eingerichtete Treibermodule, Prozessormodule oder Schaltmodule umfassen kann, in eine pulsweitenmodulierte abwechselnd aktive und inaktive Spannung umgesetzt. Das aktuelle anzuwendende Tastverhältnis wird dabei durch die Steuereinrichtung STE aus der Speichereinrichtung SPE ausgelesen. Die dezentrale Steuereinrichtung STE ist dabei separat von dem Fahrtrichtungsanzeigermodul FRA aus dem Gehäuse des Schweinwerfermoduls SW entnehmbar oder von dem Schweinwerfermodul SW lösbar. Alternativ zur dargestellten Variante kann die Speichereinrichtung auch ein Teil der Steuereinrichtung sein.

Alternativ oder ergänzend zum Fahrtrichtungsanzeigermodul FRA können durch die dezentrale Steuereinrichtung STE oder weitere Steuereinrichtungen weitere Kraftfahrzeugleuchten, wie beispielsweise ein Standlicht POS, ebenfalls gemäß der Erfindung oder einer ihrer Weiterbildungen angesteuert bzw. mit Spannung versorgt werden.

Die dezentrale Steuereinrichtung STE kann über eine zentrale Steuereinrichtung ZSTE angesteuert werden, um beispielsweise über einen eingeschalteten bzw. ausgeschalteten Fahrtrichtungsanzeiger informiert zu werden.

Im Rahmen der Erfindung liegen selbstverständlich weitere Ausführungsvarianten der dezentralen Steuereinrichtung STE und der zentralen Steuereinrichtung ZSTE. So können beide Einrichtung zu einer zusammengefasst sein oder verteilt auf mehrere Steuereinrichtungen, Treibermodule oder Schaltmittel realisiert sein.

Es wird also insbesondere die softwaremäßige Kompensation des genannten Temperatureffektes einer LED vorgeschlagen. Hierzu wird zeitabhängig eine Dimmung der LED vorgenommen. Zu Beginn der Einschaltphase, wenn die LED kalt ist und eine hohe Lichtleistung besitzt, wird die LED stark gedimmt. Mit zunehmender Eigenerwärmung der LED wird die Dimmung zurückgenommen und somit ein im Wesentlichen konstanter Lichtstrom der LED über die Zeit erreicht. Dieser eingestellte Lichtstrom orientiert sich an den gesetzlich geforderten Mindestwerten, um eine Blendung der anderen Verkehrsteilnehmer weitgehend zu reduzieren. Die typische Zeitskala für dieses Dimmverhalten liegt innerhalb weniger Blinkpulse eines Fahrtrichtungsanzeigers und wird über eine Pulsweitenmodulation der LED gesteuert. Der exakte Zeitverlauf der Dimmung ergibt sich aus dem Eigenerwärmungsverhalten der LED und wird über die Forderung nach einem konstanten Lichtstrom definiert.

Es wird insbesondere der Vorteil erreicht, dass auf ökonomische Art und Weise die Blendung durch einen LED-Fahrtrichtungsanzeiger während der ersten Blinktakte (Blinkpulse) stark reduziert wird. Dies ist auch deshalb wichtig, weil in einigen Ländern hohe Lichtstärken für den Fahrtrichtungsanzeiger im Frontscheinwerfer gefordert werden, und eine zusätzliche Überschreitung dieser Werte Blendungen des Gegenverkehrs hervorrufen kann. Die Dimmung der LED in seiner kühleren Anfangsphase (Phase mit erhöhter Lichtstärke) erlaubt eine konstante Lichtstärke über die gesamte Dauer des Blinkbetriebes, insbesondere am gesetzlich geforderten Minimalwert. Dies ist beim Einsatz von Leuchtdioden auch deshalb besonders wichtig, weil sie aufgrund kleiner Lichtaustrittsflächen an ihren Optiken zu stärkerer Blendung neigen.

## Patentansprüche

1. Kraftfahrzeugleuchtensystem
- mit einer einen Fahrtrichtungsanzeiger umfassenden Kraftfahrzeugleuchte (FRA), die als Lichtquelle zumindest eine Leuchtdiode (LED) umfasst, und
- mit einer Leuchtdioden-Steuereinrichtung (STE), die derart eingerichtet ist,
- dass die Kraftfahrzeugleuchte (FRA) abwechselnd aktiv und inaktiv geschaltet wird,
- dass die Leuchtdiode (LED) in einem aktiven Zustand der Kraftfahrzeugleuchte (FRA) im Sinne einer Pulsweitenmodulation dimmbar ist,
**dadurch gekennzeichnet, dass**
- das Tastverhältnis derart variiert wird, dass die Leuchtdiode (LED) im aktiven Zustand der Kraftfahrzeugleuchte (FRA) im Wesentlichen einen konstanten Durchschnitts-Lichtstrom ausgibt, und dass das Tastverhältnis im ersten aktiven Zustand kleiner ist als im zweiten aktiven Zustand.

2. Kraftfahrzeugleuchtensystem nach Anspruch1,
bei dem Informationen über das anzuwendende Tastverhältnis, insbesondere über den zeitlichen Verlauf des Tastverhältnisses oder die Zuordnung eines Tastverhältnisses zu einem aktiven Zustand, in der Leuchtdioden-Steuereinrichtung (STE) abgespeichert sind.

3. Kraftfahrzeugleuchtensystem nach einem der vorhergehenden Ansprüche,
bei dem Informationen über das anzuwendende Tastverhältnis, insbesondere über den zeitlichen Verlauf des Tastverhältnisses oder die Zuordnung eines Tastverhältnisses zu einem aktiven Zustand, in einer Speichereinrichtung (SPE) der Kraftfahrzeugleuchte (FRA), insbesondere des Fahrtrichtungsanzeiger-Moduls abgespeichert sind.

4. Kraftfahrzeugleuchtensystem nach einem der vorhergehenden Ansprüche,
bei dem die Leuchtdiode (LED) derart ausgeführt ist, dass der durch eine aktive Leuchtdiode erzeugte Lichtstrom bei konstantem Tastverhältnis aufgrund eines Temperatureffekts mit der Zeit abnimmt, und
bei dem das Tastverhältnis derart mit der Zeit erhöht wird, dass der Temperatureffekt im Wesentlichen kompensiert wird.

## Claims

1. A motor vehicle light system
- having a motor vehicle light (FRA) comprising a direction indicator, which light comprises at least one light-emitting diode (LED) as light source, and
- with a light-emitting-diode control device (STE) which is set up in such a way
- that the motor vehicle light (FRA) is alternately switched to active and to inactive,
- that the light-emitting diode (LED) in an active state of the motor vehicle light (FRA) is dimmable in the manner of a pulse width modulation,
**characterised in that**
- the duty cycle is varied in such a way that the light-emitting diode (LED) in the active state of the motor vehicle light (FRA) emits substantially a constant average luminous flux, and **in that** the duty cycle in the first active state is smaller than in the second active state.

2. A motor vehicle light system according to Claim 1,
in which information relating to the duty cycle to be applied, in particular to the time characteristic of the duty cycle or the association of a duty cycle with an active state, is stored in the light-emitting-diode control device (STE).

3. A motor vehicle light system according to one of the preceding claims,
in which information relating to the duty cycle to be applied, especially relating to the time characteristic of the duty cycle or the association of a duty cycle with an active state, is stored in a storage device (SPE) of the motor vehicle light (FRA), especially of the direction indicator module.

4. A motor vehicle light system according to one of the preceding claims,
in which the light-emitting diode (LED) is embodied in such a way that the luminous flux generated by an active light-emitting diode at constant duty cycle decreases with time because of a temperature effect, and
in which the duty cycle is increased with time in such a way that the temperature effect is substantially compensated.

## Revendications

1. Système d'éclairage d'un véhicule comprenant :
- un feu de véhicule (FRA) comprenant un indicateur de direction qui comporte en tant que source lumineuse au moins une diode électroluminescente (LED), et
- un dispositif de commande de diode électroluminescence (STE) qui est réalisée de sorte :
- que le feu du véhicule (FRA) soit alternativement branché pour être actif et inactif, et
que lorsque le feu du véhicule (FRA) est à l'état actif la diode électroluminescente (LED) soit graduable dans le sens d'une modulation de la largeur d'impulsion,
**caractérisé en ce que**
- le taux d'impulsions, varie de sorte que lorsque le feu du véhicule (FRA) est à l'état actif, la diode électroluminescence (LED) délivre essentiellement un flux lumineux moyen constant, et que le taux d'impulsions soit plus petit dans un premier état actif que dans un second état actif.

2. Système d'éclairage de véhicule conforme à la revendication 1,
dans lequel des informations concernant le taux d'impulsions devant être utilisé en particulier les variations dans le temps du taux d'impulsions ou l'association d'un taux d'impulsions à un état actif sont sauvegardées dans le dispositif de commande des diodes électroluminescentes (STE).

3. Système d'éclairage de véhicule conforme à l'une des revendications précédentes,
dans lequel des informations concernant le taux d'impulsions devant être utilisé, en particulier les variations dans le temps du taux d'impulsions ou l'association d'un taux d'impulsions à un état actif sont sauvegardées dans un dispositif de mémoire (SPE) du feu du véhicule (FRA), en particulier du module indicateur de direction.

4. Système d'éclairage de véhicule conforme à l'une des revendications précédentes,
dans lequel la diode électroluminescente (LED) est réalisée de sorte que le flux lumineux produit par une diode électroluminescente active décroisse avec le temps en présence d'un taux d'impulsions constant en raison d'un effet de la température, et le taux d'impulsions est augmentée avec le temps de sorte que l'effet de température soit essentiellement compensé.
